# EUROPEAN PATENT SPECIFICATION

(11) **EP 3 813 303 B1**
(45) Date of publication and mention of the grant of the patent: **31.07.2024**
(21) Application number: 19824449.3
(22) Date of filing: 29.05.2019
(51) Int. Cl.: H04L 41/12, H04L 41/14, H04W 28/16

(54) **VIRTUALIZATION METHOD AND APPARATUS FOR PHYSICAL NETWORK ELEMENT NODE, AND DEVICE AND STORAGE MEDIUM**
VIRTUALISIERUNGSVERFAHREN UND -EINRICHTUNG FÜR PHYSIKALISCHEN NETZWERKELEMENTKNOTEN UND VORRICHTUNG UND SPEICHERMEDIUM
PROCÉDÉ ET APPAREIL DE VIRTUALISATION POUR NOEUD D'ÉLÉMENT DE RÉSEAU PHYSIQUE, ET DISPOSITIF ET SUPPORT D'INFORMATIONS

(30) Priority: 29.06.2018 CN 201810695749
(43) Date of publication of application: 28.04.2021
(73) Proprietor: ZTE Corporation, Shenzhen Guangdong 518057 (CN)
(72) Inventor: WANG, Dajiang, Shenzhen, Guangdong 518057 (CN); WANG, Zhenyu, Shenzhen, Guangdong 518057 (CN)
(74) Representative: WBH Wachenhausen Patentanwälte PartG mbB
(86) International application number: PCT/CN2019/088967
(87) International publication number: WO 2020/001220

(56) References cited:
- EP-A1- 3 121 997
- CN-A- 104 486 235
- CN-A- 104 685 838
- CN-A- 107 888 425
- US-A1- 2014 098 673
- US-A1- 2018 091 251
- GUERZONI R ET AL: "Virtual Link Mapping for delay critical services in SDN-enabled 5G networks", PROCEEDINGS OF THE 2015 1ST IEEE CONFERENCE ON NETWORK SOFTWARIZATION (NETSOFT), IEEE, 13 April 2015 (2015-04-13), pages 1 - 9, XP032782108, DOI: 10.1109/NETSOFT.2015.7116163
- CAZZANIGA GIORGIO ET AL: "A new perspective on burst-switched optical networks", BELL LABS TECHNICAL JOURNAL, WILEY, CA, US, vol. 18, no. 3, 1 December 2013 (2013-12-01), pages 111 - 131, XP011628075, ISSN: 1089-7089, [retrieved on 20140315], DOI: 10.1002/BLTJ.21630

## Description

### TECHNICAL FIELD

The present invention relates to, but not limited to, the technical field of communication, and in particular to a method for virtualization of physical network element node, a device and a storage medium.

### BACKGROUND

The network services of the 5th-Gegeneration (5G) mobile communication technology have high requirements for performance indexes such as clock accuracy, delay and reliability. An optical transport network (OTN) is usually considered to be deployed on a middlehaul and backhaul network of the 5G, and network resources in the OTN are sliced with a resource optimization algorithm by using a service level agreement (SLA) delay level as a slicing optimization strategy, to satisfy the delay requirements of various 5G services occupying corresponding slice resources. The layers of the open system interconnection (OSI) network model affect the delay. Generally, before the implementation of the network slicing algorithm, there is a need to calculate a delay accumulation value between each pair of adjacent network element nodes on the basis of the topology of the OTN physical network in the existing technology and according to the factors affecting the delay in the layers of the OSI, and form an OTN delay attribute topological map. On this basis, the network slicing algorithm using the delay optimization strategy as a target function is implemented. For example, Guerzoni et. al discloses a method for virtualization of a physical network node, cf. Guerzoni, R. , et al. "Virtual Link Mapping for Delay Critical Services in SDN-enabled 5G Networks." NetSoft 2015, 1st IEEE Conference on Network Softwarisation IEEE, 2015. Moreover, European patent application EP 3121997A1 proposes a method of provisioning a service in a communication network, in which the service comprises at least one virtual network function and at least one virtual network path, which at least one virtual network function and at least one virtual network path are to be implemented in the communication network.

In the existing technology, the delay accumulation between each pair of adjacent network element nodes and the switching delay caused by passing each network element node are related to the device properties of the corresponding node. For a network element node running with only one switching technology and a single scheduling attribute, the delay parameters are unique and fixed.

However, for a network element node with a layer 0 (L0)/L1/L2 hybrid scheduling functional attribute, in the process of passing through different OSI layers of a node, the corresponding delay values are different. In this case, the topology of the OTN physical network cannot cover various switching delays appeared, when a service passes through different switching layers of the network element node, in a hybrid scheduling network element node networking scenario. Therefore, in the delay optimization strategy, the calculation of the shortest delay path cannot be implemented due to "the uncertainty of the delay attribute of the calculation object".

### SUMMARY

In view of this, the embodiments of the present invention are expected to provide a method for virtualization of physical network element node, a device and a storage medium. The features of the method for virtualization of physical network element node, the device and the storage medium according to embodiments of the present disclosure are set out in the appended set of claims.

### BRIEF DESCRIPTION OF DRAWINGS

Fig. 1 is a flowchart of a method for virtualization of a physical network element node according to an embodiment of the present invention;
Fig. 2 is an embodiment of an OTN delay attribute topological map of a node with an L2/L1/L0 hybrid scheduling capability;
Fig. 3 is a schematic diagram of a device node model with an L0/L1/L2 hybrid scheduling function;
Fig. 4 is a virtualization delay model of a physical network element node acting as a first or last node of a service connection or OVPN virtual link according to an embodiment of the present invention;
Fig. 5 is a virtualization delay model of a physical network element node acting as an intermediate node of a service connection or OVPN virtual link and having only two physical external optical fiber links according to an embodiment of the present invention;
Fig. 6 is a virtualization delay model of a physical network element node acting as an intermediate node of a service connection or OVPN virtual link and having three physical external optical fiber links according to an embodiment of the present invention;
Fig. 7 is a virtualization delay model of a physical network element node acting as an intermediate node of a service connection or OVPN virtual link and having a plurality of (more than three) physical external optical fiber links according to an embodiment of the present invention;
Fig. 8 is a schematic diagram of a virtual network delay topological map when physical nodes A and E act as first or last nodes of a service connection or OVPN virtual link, respectively, according to an embodiment of the present invention;
Fig. 9 is a schematic diagram of a virtual network delay topological map when physical nodes B and D act as first or last nodes of a service connection or OVPN virtual link, respectively, according to an embodiment of the present invention;
Fig. 10 is a flowchart of a method for virtualization of a physical network element node according to an embodiment of the present invention;
Fig. 11 is a schematic diagram of self-circulation in a virtual node and determination according to an embodiment of the present invention;
Fig. 12 is a structure diagram of a device for virtualization of a physical network element node according to an embodiment of the present invention; and
Fig. 13 is a structure diagram of a physical network element node apparatus according to an embodiment of the present invention.

### DETAILED DESCRIPTION

Embodiments of the present invention will be described in more detail below with reference to the accompanying drawings. While embodiments of the present invention are shown in the accompanying drawings, it should be understood that the invention may be implemented in various forms without being limited by the embodiments set forth herein. Rather, these embodiments are provided to enable a more thorough understanding of the present invention and to enable the full scope of the present invention to be communicated to those skilled in the art.

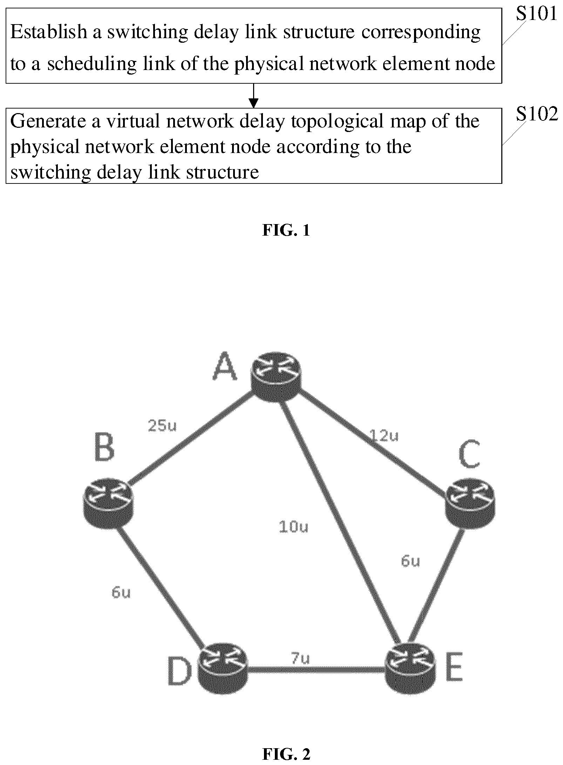

An embodiment of the present invention provides a method for virtualization of a physical network element node. As shown in Fig. 1, the method includes the following steps.

In a step of S101, a switching delay link structure corresponding to a scheduling link of the physical network element node is established, where a service is enabled to be scheduled to a corresponding switching function via the scheduling link when the service passes through the physical network element node.

In a step of S102, a virtualization delay model of the physical network element node is generated according to the switching delay link structure.

In this embodiment of the present invention, by establishing a switching delay link structure for a scheduling link of a network element node, a virtualization delay model of the physical network element node can be generated according to the switching delay link structure. Accordingly, the problem that the topology of the OTN physical network in the existing technology cannot cover various switching delays appeared when a service passes through different switching layers of the hybrid scheduling network element node can be effectively solved, and the requirements for calculation of the shortest delay path can be effectively satisfied in the application scenarios of the 5G slicing technology.

In this embodiment of the present invention, the switching layer generally corresponds to a switching function, e.g. , OSI network model layers in an OSI network model, where the OSI network model layers may include: an L0 layer, i.e., the 0^{th} layer in the OSI network model; an L1 layer, i.e., the first layer in the OSI network model; an L2 layer, i.e., the second layer in the OSI network model; and, an L3 layer, i.e., the third layer in the OSI network model. In this embodiment of the present invention, the hybrid scheduling network element node refers to a network element node with a hybrid switching functional scheduling capability, for example, a network element node having at least two layers or all layers of the above OSI network model layers. In this embodiment of the present invention, the switching delay link structure is a virtual link structure corresponding to the preset delay. In some embodiments, the method also includes a step of configuring delay values for interlayer adaptive delay links.

The network services in the 5G have higher requirements for performance indexes such as clock accuracy, delay and reliability, among which the clock accuracy is required to reach the nanosecond level, and the delay is required to reach the microsecond level. To satisfy the service requirements for bandwidth, delay, reliability and the like, service concepts such as ultra reliable & low latency communication (uRLLC), massive machine type of communication (mMTC) and enhance mobile broadband (eMBB) have emerged, and the conventional quality of service (QoS) strategies can no longer satisfy the above requirements. The network slicing technology can allocate different network resources to different services. An independent physical network is sliced into a plurality of logic networks, and pre-allocation and pre-optimization of resources is further realized according to the service level agreement (SLA) level of the slices, so as to accurately control the bandwidth and delay of services on different slices and make a full and effective use of the network resources.

As an important part of the 5G system networking architecture, the optical transport network (OTN) is usually considered to be deployed on a middlehual and backhaul network of the 5G, and network resources in the OTN are sliced with a resource optimization algorithm by using the SLA delay level as a slicing optimization strategy, so as to satisfy the delay requirements for various 5G services occupying corresponding slice resources. This is a key technology for the OTN to satisfy the 5G networking requirements. In the OSI network model, the factors affecting the delay are shown in Table 1.

**Table 1: Delay of each layer corresponding to the OSI network model**

| OSI layer | Network element node | Delay |
|---|---|---|
| L0 | Optical device (ROADM, multiplexer/demultiplexer, filter, coupler) | Nanosecond level |
| L0 | EDFA optical amplifier | 100 ns level |
| L0 | Optical fiber (including DCF for dispersion compensation) | 5 ms/km |
| | | 5 ms/1000 km |
| L1 | OTN node (encapsulation/decapsulation, EFC encoder, switching) | 10 µs-100 µs level, load-independent |
| L2 | L2 switcher | 1 ms-10 ms level, load-dependent |
| L3 | Router, L3 switcher, etc. | 1 ms-10 ms level, load-dependent |

Generally, before the implementation of the slicing algorithm, there is a need to calculate a delay accumulation value between each pair of adjacent network element nodes on the basis of the OTN physical network topology in the existing technology and according to the factors described in Table 1, and form an OTN delay attribute topological map, as shown in Fig. 2. On this basis, the network slicing algorithm using the delay optimization strategy as a target function is implemented.

The network slicing algorithm usually contains a sub-algorithm that takes Fig. 2 as a calculation object and calculates the shortest delay path between a specified pair of network element nodes. The shortest delay requires that the sum of the delay accumulation values between each pair of adjacent network element nodes in the path between the specified pair of network element nodes, and the switching delay of each node being passed in this path, is the smallest. Generally, the delay accumulation value between each pair of adjacent network element nodes and the switching delay value of each network element node being passed are related to the device attributes of the corresponding node. For a single-scheduling network element node with only one switching technical capability, these delay parameters are unique and fixed.

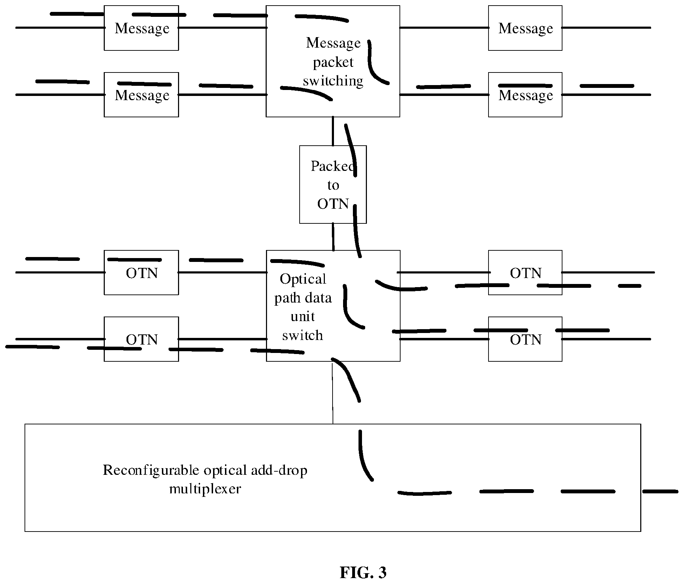

However, for a network device node model with an L0/L1/L2 hybrid scheduling function shown in Fig. 3, in the process of passing through different switching layers of the node, the delay values are different. In this case, the topology in Fig. 2 cannot cover various switching delays appeared when a service passes through different switching layers of the node in a hybrid scheduling node networking scenario. Therefore, the calculation of the shortest delay path cannot be implemented due to "the uncertainty of the delay attribute of the calculation object". However, in this embodiment of the present invention, the requirements for calculation of the shortest delay path can be effectively satisfied in the application scenarios of the 5G slicing technology.

In some embodiments, the switching delay link structure is at least one switching delay matrix. The process of establishing a switching delay link structure corresponding to a scheduling link of the physical network element node includes the following steps.

When the physical network element node is a first node or a last node, a switching delay matrix corresponding to the scheduling link of the physical network element node is established.

When the physical network element node is an intermediate node, a switching delay matrix corresponding to the scheduling link of the physical network element node is established between every two physical links.

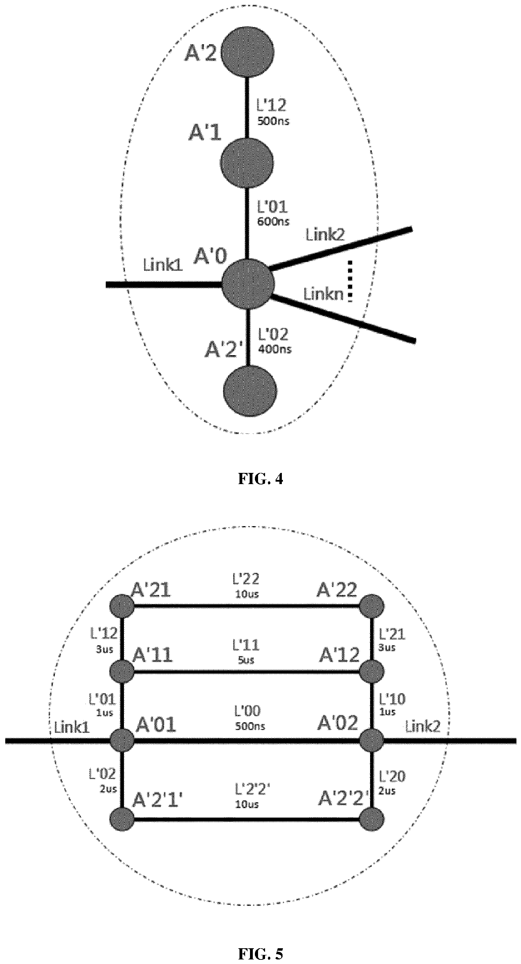

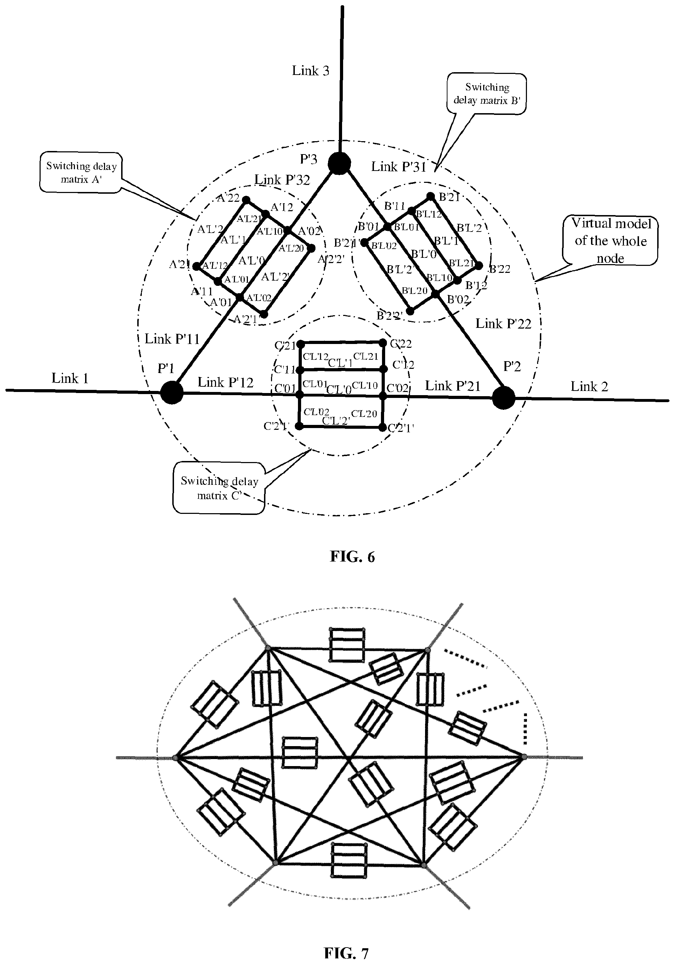

Specifically, as shown in Fig. 4, when the physical network element node is a first node or a last node, a switching delay matrix may be established, where a dashed line in this figure shows a switching delay matrix, where A'0, A'1, A'2 and A'2' represent a first virtual layer, a second virtual layer, a third virtual layer and a fourth virtual layer, respectively, and each virtual layer is composed of a virtual node. As shown in Fig. 5, when the physical network element node is an intermediate node and has two physical links, where A'01 and A'02 consist a virtual node pair of the first virtual layer, A'11 and A'12 consist a virtual node pair of the second virtual layer, A'21 and A'22 consist a virtual node pair of the third virtual layer, and A'2' 1' and A'2'2' consist a virtual node pair of the fourth virtual layer. As shown in Fig. 6, when the physical network element node is an intermediate node and has three physical links, a switching delay matrix may be established between every two of the three physical links. Similarly, as shown in Fig. 7, when the physical network element node is an intermediate node and has more than three physical links, a switching delay matrix may be established between every two of the more than three physical links.

In an application scenario of the 5G technology, scheduling links for a service passing through the hybrid physical network element node includes the following: L0xL0; L0-L1×L1-L0; L0-L1-L2×L2-L1-L0; L0-L2×L2-L0 (where "x" represents the switching function of the corresponding layer).

Since each service is scheduled to pass through different switching layers, the total switching delay of each service passing through the hybrid scheduling node is different for different scheduling types. When path calculation is performed by a delay optimization strategy in a software defined network (SDN) or a wavelength division multiplexing (WDM)/OTN-based automatically switched optical network (WASON), there is a need to consider the characteristics of the switching scheduling type of the hybrid scheduling node. The expression of the single node model shown in Fig. 2 cannot satisfy the requirements of the delay path calculation. Therefore, in this embodiment of the present invention, a virtualization delay model is generated by a node virtualization technology, and the physical network element node having the characteristics of the above scheduling types can be expressed in form of a path calculation topology, so that the requirements of an algorithm using delay optimization as a target strategy can be satisfied.

On this basis, in some embodiments, the switching layer is an open system interconnection (OSI) model layer. The process of establishing a switching delay matrix corresponding to a scheduling link of the physical network element node includes the following steps.

A plurality of virtual layers are established according to the OSI model layer of the physical network element node.

Interlayer adaptive delay links are established among the plurality of virtual layers according to the scheduling link.

The switching delay matrix is established according to the plurality of virtual layers and the interlayer adaptive delay links.

In the above steps, the plurality of virtual layers include a first virtual layer corresponding to the L0 layer, a second virtual layer corresponding to the L1 layer and a third virtual layer corresponding to the L2 layer.

In some embodiments, the third virtual layer includes a first virtual sub-layer and a second virtual sub-layer, and the process of establishing interlayer adaptive delay links among the plurality of virtual layers may include the following steps, as shown in Figs. 4-7.

A first interlayer adaptive delay link is established between the first virtual layer and the second virtual layer.

A second interlayer adaptive delay link is established between the second virtual layer and the first virtual sub-layer.

A third interlayer adaptive delay link is established between the first virtual sub-layer and the second virtual sub-layer.

In some embodiments, the process of establishing a plurality of virtual layers according to the OSI model layer of the physical network element node includes the following steps.

When the physical network element node is a first node or a last node, as shown in Fig. 4, a plurality of virtual nodes are established according to the OSI model layer, and each of the virtual nodes forms a virtual layer.

When the physical network element node is an intermediate node, as shown in Figs. 5-7, a plurality of virtual layers are established according to the OSI model layer, each of the virtual layers is composed of a virtual node pair, and an interlayer adaptive delay link is established between the virtual node pair of each of the virtual layers.

In some embodiments, it is also possible to include configuring delay values for interlayer adaptive delay links.

In some embodiments, the virtual node pair includes a first virtual node and a second virtual node; the interlayer adaptive delay link between any two virtual layers includes a first interlayer adaptive delay link and a second interlayer adaptive delay link; and, the process of establishing interlayer adaptive delay links among the plurality of virtual layers further includes the following steps, as shown in Figs. 5-7.

The first interlayer adaptive delay link is established between first virtual nodes of the any two virtual layers, and the second interlayer adaptive delay link is established between second virtual nodes of the any two virtual layers.

In the OTN delay attribute topology shown in Fig. 2, if the network element node A is a node with an L0/L1/L2 hybrid scheduling function, it is equivalent that the physical network element node corresponding to the node A can be abstracted into the virtualization delay models shown in Figs. 4, 5, 6 and 7. The virtualization delay model can also be expressed as a virtualization structure, a virtualization model or the like.

In these examples, when the physical network element node acts as a first or last node of a service connection or OVPN virtual link, the virtualization delay model of the physical network element node is described as Fig. 3.
1. A physical network element node in the sense of a network device, is abstracted into a virtualization delay model in a dash-dotted region.
2. Link1, Link2...Linkn represent physical links of this network element node, corresponding to the physical optical fiber links connected to the external topology.
3. Nodes A'0, A'1, A'2 and A'2' represent the virtual layers (the first virtual layer, the second virtual layer, the first virtual sub-layer and the second virtual sub-layer) corresponding to the L0, L1, L2 and L2 layers of the hybrid scheduling node, respectively, and A'2' may represent the mirror of A'2.
4. L'01 represents the interlayer adaptive delay link between the L0 and L1 layers, with a delay of 600 ns; L'12 represents the interlayer adaptive delay link between the L1 and L2 layers, with a delay of 500 ns; and, L'02 represents the adaptive link between the L0 and L2 layers, with a delay of 400 ns. Each interlayer adaptive delay link may have a preset delay value.

When the physical device node acts as an intermediate node of a service connection or OVPN virtual link and has only two physical external optical fiber links, the virtualization delay model of the physical network node is described as Fig. 4.
1. A physical network element node in the sense of a network device, is abstracted into a virtualization delay model in a dash-dotted region.
2. Link1 and Link2 represent the physical links of this node, corresponding to the physical optical fiber links connected to the external topology; and, the physical link delay values corresponding to the Link1 and Link2 depend on factors such as external transmission distance and will not be represented here.
3. In addition, the virtualization delay model structure of this network element node includes 4 virtual node pairs, 4 node-internal switching delay links and 3 pairs of node-internal interlayer adaptive delay links, where each virtual node pair represents the entrance or exit of the corresponding switching layer; each switching delay link is marked with the switching delay value of this device node in this switching layer; and each internal interlayer adaptive delay link is also marked with the adaptive delay value. The internal switching delay link (i.e., the interlayer adaptive delay link) may be specifically described below.

The virtualization node pair corresponding to the L0 layer switching: the switching delay value for the switching delay link L'00 between the entrance and exit nodes A'01 and A'02 is illustrated as 500 ns.

The virtualization node pair corresponding to the L1 layer switching: the switching delay value for the switching delay link L'11 between the entrance and exit nodes A'11 and A'12 is illustrated as 5 µs.

The virtualization node pair corresponding to the L2 layer switching function: the switching delay value for the switching delay link L'22 between the entrance and exit nodes A'21 and A'22 is illustrated as 10 µs.

The delay value for the corresponding interlayer adaptive delay link pair L'01 and L'10 between the L0 and L1 layers is illustrated as 1 µs.

The delay value for the corresponding interlayer adaptive delay link pair L'12 and L'21 between the L1 and L2 layers is illustrated as 3 µs.

The node pair A'2'1' and A'2'2' is the mirror nodes of A'21 and A'22, respectively; L'2'2' is the mirror switching delay link of L'22, and the delay value for L'2' 1' must be the same as that for L'22; L'02 and L'20 consist the adaptive delay link pair between the L0 and L2 layers, and the delay values for both L'02 and L'20 are 2 µs; and, the node pair A'2'1' and A'2'2' and the switching delay link L'2'2' between this node pair, as well as the adaptive delay link pair L'02 and L'20, are used for describing the service scheduling type of L0-L2×L2-L0 that does not passes through the L1 layer.

In some embodiments, before or after the step of establishing a switching delay link structure corresponding to a scheduling link of the physical network element node, the method further includes the following steps. The scheduling link being a link enabling a service to be scheduled to a corresponding switching layer when the service passes through the physical network element node.

When the first virtual layer is composed of a virtual node, a physical link of the physical network element node is set on this virtual node.

When the first virtual layer is composed of a virtual node pair, a physical link of the physical network element node is set on each of two virtual nodes in the virtual node pair; or, an external virtual node corresponding to each physical port of the physical network element node is established, a physical link of the physical network element node is set on each external virtual node, and an internal virtual link for connecting the corresponding external virtual nodes are set on each of two virtual nodes of the virtual node pair.

For example, when the physical device node acts as an intermediate node of a service connection or OVPN virtual link and has three physical external optical fiber links, the virtualization delay model of the physical network node is described as Fig. 6.
1. A physical node in the sense of a network device, is abstracted into a virtualization model structure in a region shown by the large dash-dotted circle.
2. Link1, Link2 and Link3 represent the physical links of this node corresponding to the physical optical fiber links connected to the external topology; and, the link delay values corresponding to the Link1, Link2 and Link3 depend on factors such as external transmission distance and will not be taken into consideration here.
3. The optical fiber link physical ports of this node are abstracted into external virtual nodes P'1, P'2 and P'3, respectively.
4. There must be a switching delay matrix between any two external virtual nodes, and there are switching delay matrices A', B' and C', respectively.
5. LinkP'11 and LinkP'12, LinkP'21 and LinkP'22, LinkP'31 and LinkP'32 are internal virtual links connecting the external virtual nodes P'1, P'2 and P'3 to the switching delay matrices A', B' and C', respectively, and are topological abstract descriptions of the overall relationship of the node virtualization model. The delay value may be expressed as 0 µs.
6. The meanings of the models of the switching delay matrices A', B' and C' are the same and all refer to the delay characteristics of different switching scheduling models when the service passes through the L0, L1 and L2 layers. Now, description will be given by taking the switching delay matrix A' as an example. The switching delay matrix A' contains 4 virtual sub-node pairs, 4 matrix internal switching delay links and 3 pairs of matrix-internal interlayer adaptive delay links. Each virtual sub-node pair represents the entrance or exit of the corresponding switching layer. Each switching delay link has a switching delay value of the corresponding service in this switching layer, which can be obtained by the link attribute configuration. Each matrix-internal interlayer adaptive delay link also has a corresponding adaptive delay value, which can be obtained by the link attribute configuration. Each virtual sub-node and link in the switching delay matrix A' are defined below.

The virtualization node pair corresponding to the L0 layer switching: the switching delay link between the entrance and exit nodes A'01 and A'02 is A'L'0.

The virtualization node pair corresponding to the L1 layer switching: the switching delay link between the entrance and exit nodes A' 11 and A'1 2 is A'L'1.

The virtualization node pair corresponding to the L2 layer switching function: the switching delay link between the entrance and exit nodes A'21 and A'22 is A'L'2.

The corresponding adaptive delay link pair between the L0 and L1 layers is A'L'01 and A'L'10.

The corresponding adaptive delay link pair between the L2 and L2 layers is A'L'12 and A'L'21.

The virtual node pair A'2'1' and A'2'2' is the mirror nodes of A'21 and A'22, respectively; A'L'2' is the mirror switching delay link of A'L'2, and the delay value for A'L'2' must be the same as that for A'L'2; A'L'02 and A'L'20 consist the adaptive delay link pair between the L0 and L2 layers; and, the node pair A'2'1' and A'2'2' and the switching delay link A'L'2' between this node pair, as well as the adaptive delay link pair A'L'02 and A'L'20, are used for describing the service scheduling type of L0-L2×L2-L0 that is from the L0 layer to the L2 layer and does not passes through the L1 layer.

Of course, when the physical device node acts as an intermediate node of a service connection or OVPN virtual link and has more than three physical external optical fiber links, the virtualization delay model abstracted from the physical network node is described as Fig. 7.
1. A physical node in the sense of a network device, is abstracted into a virtualization model structure in a region shown by the large dash-dotted circle.
2. The dashed line in the dash-dotted line represents a similar expansion of the virtualization model of the physical node with the increase of the number of external physical optical fiber links of this physical node.
3. The definition of the switching delay matrix in this figure is the same as that in Fig. 6.
4. It is to be noted that, the virtual nodes used to represent optical fiber link physical ports in the virtualization delay mode must be paired with each other and are connected to a switching delay matric through two internal virtual links.
5. This model structure ensures that, in case a service passes through an intermediate node with an L2/L1/L0 hybrid scheduling capability, the service must pass through an internal delay switching matrix when passing through any one pair of entrance and exit optical fiber link physical ports of this node. Accordingly, the delay generated by the service when passing through this node is accurately expressed in form of the model structure by using the map topological language.

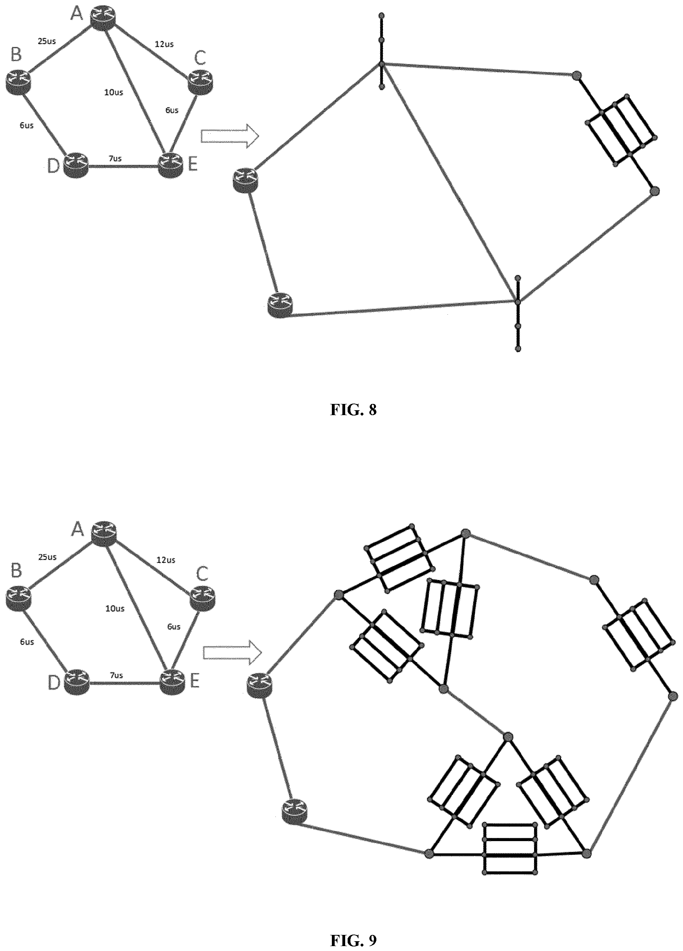

Based on the virtualization delay models described in Figs. 4-7, if it is assumed that A, C and E in the "OTN delay attribute topological map" in Fig. 2 are physical network element nodes with an L0/L1/L2 hybrid scheduling function and the nodes Band D are physical network element nodes with only an L0 scheduling function, in a specific scenario, Fig. 2 can be abstracted and defined as the virtualization delay model in Fig. 8 or 9.Fig. 8 shows a virtualization delay model corresponding to the path delay optimization when the physical network element nodes A and E act as first or last nodes of a service connection or OVPN virtual link, respectively. Fig. 9 shows a virtualization delay model corresponding to the path delay optimization when the physical network element nodes B and D act as first or last nodes of a service connection or OVPN virtual link, respectively. The nodes in the virtualization delay models on the right of Figs. 8 and 9 are map topological nodes with the same algorithmic logic meaning in the topological map; and, the links in the virtualization delay models on the right of Figs. 7 and 8 are map topological links with same algorithmic logic meaning in the topological map.

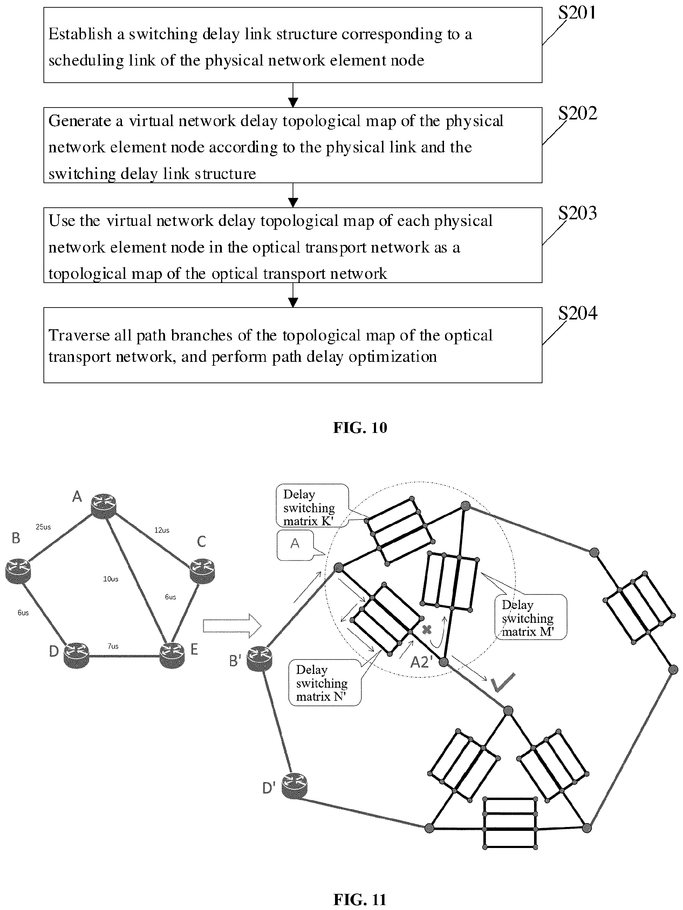

An embodiment of the present invention provides a method for virtualization of a physical network element node. As shown in Fig. 10, the path delay optimization method, based on the virtualization delay model generated above, includes the following steps.

In a step of S201, a switching delay link structure corresponding to a scheduling link of the physical network element node is established, where the scheduling link being a link enabling a service to be scheduled to a corresponding switching layer when the service passes through the physical network element node, while switching delays of the switching layers are different from each other.

In a step of S202, a virtualization delay model of the physical network element node is generated according to the physical link and the switching delay link structure.

In a step of 203, a virtual network delay topological map of the optical transport network is generated according to the virtualization delay model of each physical network element node in the optical transport network.

In a step of S204, a traversal is performed on path branches of the virtual network delay topological map, and path delay optimization is performed.

In this embodiment of the present invention, the virtualization delay model is introduced into the optical transport network, so that the problem that the topology of the OTN physical network in the existing technology cannot cover various switching delays appeared when a service passes through different switching layers of the hybrid scheduling network element node can be effectively solved on the basis of the path delay optimization, and the requirements for calculation of the shortest delay path can be effectively satisfied in the application scenarios of the 5G slicing technology.

In some embodiments, the switching delay link structure is at least one switching delay matrix. The path delay optimization may further include the following steps.

During traversing the current topological node of the current path, if a current topological node and a next-hop topological node of the current topological node belong to a same physical network element node but belong to different switching delay matrices, the next-hop topological node is skipped, and the traversal is continued on other next-hop topological nodes.

By taking the network scenario described in Fig. 9 as an example, the steps of path delay optimization of the service connection or OVPN virtual link mapping are as follows.

In a step 1, the network topology in Fig. 2 is converted into a virtual network delay topology on the right of Fig. 9.

In a step 2, a delay optimization path between nodes B' and D' is calculated, taking delay optimization as a target function, by an algorithm engine.

In a step 3, during a traversal performed on path branches with a Dijkstra or KSP algorithm, when a node is passed through in a certain topology, the attribute of a next-hop node to this node is determined.

In a step 4, if the next-hop topological node and the topological nodes that have been passed by in this path belong to a same physical network element node (e.g., the dash-dotted circle indicated by the node A on the right of Fig. 9) but belong to different switching delay matrices, this topological node is skipped (this step is used to prevent a situation that "self-circulation of the path is formed in a virtual topology that belongs to a same physical node, in the calculation process with a algorithm). For example, as shown in Fig. 11, a next-hop branch marked with " ×" of the topological node A2' will be skipped, and a next-hop branch marked with " √" will be selected by the algorithm. Otherwise, the delay path between the nodes B' and D' will form a loop in the virtual topology of A.

In a step 5, the traversal is continued on other next-hop nodes to this node, until a next-hop node that does not satisfy the condition in the step 4 is found.

In a step 6, calculation is continued according to the processing mechanism with the Dijkstra or KSP algorithm.

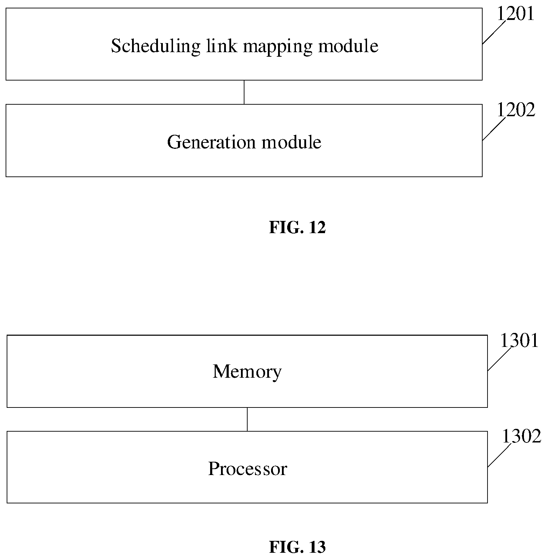

An embodiment of the present invention provides a device for virtualization of a physical network element node. As shown in Fig. 12, the device includes the following modules.

A scheduling link mapping module 1201 is configured to establish a switching delay link structure corresponding to a scheduling link of the physical network element node, where the scheduling link being a link enabling a service to be scheduled to a corresponding switching layer when the service passes through the physical network element node.

A generation module 1202 is configured to generate a virtualization delay model of the physical network element node according to the switching delay link structure.

In this embodiment of the present invention, by establishing a switching delay link structure for a scheduling link of a network element node, a virtualization delay model of the physical network element node can be generated according to the switching delay link structure. Accordingly, the problem that the topology of a mobile network (particularly an OTN physical network) in the existing technology cannot cover various switching delays appeared when a service passes through different switching layers of the hybrid scheduling network element node can be effectively solved, and the requirements for calculation of the shortest delay path can be effectively satisfied in the application scenarios of the 5G slicing technology.

In some embodiments, the switching delay link structure is at least one switching delay matrix, and the scheduling link mapping module 1201 is further configured to: establish a switching delay matrix corresponding to the scheduling link of the physical network element node when the physical network element node is a first node or a last node; and establish, between every two physical links, a switching delay matrix corresponding to the scheduling link of the physical network element node when the physical network element node is an intermediate node.

In some embodiments, the switching layer is an open system interconnection (OSI) model layer; and, during establishing a switching delay matrix corresponding to the scheduling link of the physical network element node, the physical link mapping module 1202 is configured to establish a plurality of virtual layers according to the OSI model layer of the physical network element node, establish interlayer adaptive delay links among the plurality of virtual layers according to the scheduling link, and establish the switching delay matrix according to the plurality of virtual layers and the interlayer adaptive delay links.

In some embodiments, the OSI model layer includes an L0 layer, an L1 layer and an L2 layer; and, the plurality of virtual layers include a first virtual layer corresponding to the L0 layer, a second virtual layer corresponding to the L1 layer and a third virtual layer corresponding to the L2 layer.

In some embodiments, the third virtual layer includes a first virtual sub-layer and a second virtual sub-layer; and, during establishing interlayer adaptive delay links among the plurality of virtual layers, the scheduling link mapping module 1201 is configured to: establish a first interlayer adaptive delay link between the first virtual layer and the second virtual layer, establish a second interlayer adaptive delay link between the second virtual layer and the first virtual sub-layer, and establish a third interlayer adaptive delay link between the first virtual sub-layer and the second virtual sub-layer.

In some embodiments, during establishing a plurality of virtual layers according to the OSI model layer of the physical network element node, the scheduling link mapping module 1201 is configured to: establish a plurality of virtual nodes according to the OSI model layer when the physical network element node is a first node or a last node, each of the virtual nodes forming a virtual layer; and, establish a plurality of virtual layers according to the OSI model layer when the physical network element node is an intermediate node, each of the virtual layers being composed of a virtual node pair, and establish an interlayer adaptive delay link between the virtual node pair of each of the virtual layers.

In some embodiments, the virtual node pair includes a first virtual node and a second virtual node; the interlayer adaptive delay link between any two virtual layers includes a first interlayer adaptive delay link and a second interlayer adaptive delay link; and, during establishing interlayer adaptive delay links among the plurality of virtual layers, the scheduling link mapping module 1202 is further configured to: establish the first interlayer adaptive delay link between first virtual nodes of the any two virtual layers, and establish the second interlayer adaptive delay link between second virtual nodes of the any two virtual layers.

In some embodiments, the device further include a physical link mapping module configured to: when the first virtual layer is composed of a virtual node, set a physical link of the physical network element node on this virtual node; when the first virtual layer is composed of a virtual node pair, set a physical link of the physical network element node on each of two virtual nodes in this virtual node pair; or, establish an external virtual node corresponding to each physical port of the physical network element node, set a physical link of the physical network element node on each external virtual node, and set, on each of two virtual nodes of the virtual node pair, an internal virtual link for connecting the corresponding external virtual nodes.

In some embodiment, the device further includes a delay optimization module configured to generate a virtual network delay topological map of the optical transport network according to the virtualization delay model of each physical network element node in the optical transport network, traverse path branches of the virtual network delay topological map, and perform path delay optimization.

In some embodiments, the switching delay link structure is at least one switching delay matrix; the delay optimization module is configured to perform path delay optimization, and further configured to: during traversing the current topological node of the current path, if a next-hop topological node of the current topological node and the current topological node belong to a same physical network element node but belong to different switching delay matrices, skip the next-hop topological node, and continue to traverse other next-hop topological nodes.

An embodiment of the present invention further provides a physical network element node apparatus. As shown in Fig. 13, the apparatus includes a memory 1301 and a processor 1302, the memory 1301 stores a computer program for virtualization of the physical network element node, and the processor 1302 executes the computer program to implement the method for virtualization of the physical network element node provided in the embodiments of the present invention.

An embodiment of the present invention provides a computer readable storage medium. The computer readable storage medium stores a computer program. The computer program may be executed by at least one processor, so as to implement the method for virtualization of the physical network element node provided in the embodiments of the present invention.

It is to be noted that, in this context, the terms "comprise", "include", or any other variant thereof are intended to encompass non-exclusive inclusions such that a process, method, article, or apparatus that includes a series of elements includes not only those elements, but also other elements that are not explicitly listed, or elements inherent to such a process, method, article, or apparatus. Without further limitations, the element(s) defined by the statement "comprise a..." do not exclude further identical elements in the process, method, article, or apparatus including the element.

The above embodiment number of the present invention is merely for description, and does not represent the advantages or disadvantages of the embodiment.

With the description of the above embodiments, a person skilled in the art will clearly understand that the method of the above embodiments may be implemented by software plus a necessary general hardware platform, and of course may also be implemented by hardware, but in many cases the former is a better implementation. Based on such an understanding, the technical schemes of the present invention, essentially or a portion of the technology contributing to the existing technology, may be embodied in the form of a software product stored in a storage medium (e.g., a ROM/RAM, a magnetic disk, an optical disc), including several instructions for causing a terminal (which may be a mobile phone, a computer, a server, an air conditioner, or a network apparatus, etc.) to perform the methods described in the various embodiments of the present invention.

The embodiments of the present invention have been described above with reference to the accompanying drawings, but the present invention is not limited to the above-mentioned embodiments, the above-mentioned embodiments are merely illustrative but not limiting, and those of ordinary skill in the art, inspired by the present invention, may make various forms without departing from the scope of the purposes and claims of the present invention, all of which fall within the protection of the present invention.

## Claims

1. A method for virtualization of a physical network element node, comprising steps of:
establishing (S101, S201) a switching delay link structure corresponding to a scheduling link of the physical network element node, wherein the scheduling link being a link enabling a service to be scheduled to a corresponding switching layer when the service passes through the physical network element node; and
generating a virtualization delay model of the physical network element node according to the switching delay link structure;
the method **characterised in that**
the switching delay link structure is at least one switching delay matrix, and the step of establishing (S101, S201) a switching delay link structure corresponding to a scheduling link of the physical network element node comprises:
when the physical network element node is a first node or a last node, establishing a switching delay matrix corresponding to the scheduling link of the physical network element node; and
when the physical network element node is an intermediate node, establishing, between every two physical links, a switching delay matrix corresponding to the scheduling link of the physical network element node.

2. The method of claim 1, wherein the switching layer is an open system interconnection, OSI model layer; the step of establishing a switching delay matrix corresponding to a scheduling link of the physical network element node comprises:
establishing a plurality of virtual layers according to the OSI model layer of the physical network element node;
establishing a plurality of interlayer adaptive delay links among the plurality of virtual layers according to the scheduling link; and
establishing the switching delay matrix according to the plurality of virtual layers and the interlayer adaptive delay links.

3. The method of claim 2, wherein the OSI model layer comprises an L0 layer, an L1 layer and an L2 layer; the plurality of virtual layers comprise a first virtual layer corresponding to the L0 layer, a second virtual layer corresponding to the L1 layer and a third virtual layer corresponding to the L2 layer.

4. The method of claim 3, wherein the third virtual layer comprises a first virtual sub-layer and a second virtual sub-layer, and the step of establishing a plurality of interlayer adaptive delay links among the plurality of virtual layers comprises:
establishing a first interlayer adaptive delay link between the first virtual layer and the second virtual layer;
establishing a second interlayer adaptive delay link between the second virtual layer and the first virtual sub-layer; and
establishing a third interlayer adaptive delay link between the first virtual sub-layer and the second virtual sub-layer.

5. The method of claim 2, wherein the step of establishing a plurality of virtual layers according to the OSI model layer of the physical network element node comprises:
when the physical network element node is a first node or a last node, establishing a plurality of virtual nodes according to the OSI model layer, each of the virtual nodes forming a virtual layer; and
when the physical network element node is an intermediate node, establishing a plurality of virtual layers according to the OSI model layer, each of the virtual layers being composed of a virtual node pair, and establishing an interlayer adaptive delay link between the virtual node pair of each of the virtual layers.

6. The method of claim 5, wherein the virtual node pair comprises a first virtual node and a second virtual node; the interlayer adaptive delay link between any two virtual layers comprises a first interlayer adaptive delay link and a second interlayer adaptive delay link; and the step of establishing a plurality of interlayer adaptive delay links among the plurality of virtual layers further comprises:
establishing the first interlayer adaptive delay link between first virtual nodes of the any two virtual layers, and establishing the second interlayer adaptive delay link between second virtual nodes of the any two virtual layers.

7. The method of claim 3 or 4, further comprising:
when the first virtual layer is composed of a virtual node, setting a physical link of the physical network element node on this virtual node; and
when the first virtual layer is composed of a virtual node pair, setting a physical link of the physical network element node on each of two virtual nodes in the virtual node pair; or, establishing an external virtual node corresponding to each physical port of the physical network element node, setting a physical link of the physical network element node on each external virtual node, and setting, on each of two virtual nodes of the virtual node pair, an internal virtual link for connecting the corresponding external virtual nodes.

8. The method of any one of claims 1 to 7, after the step of generating a virtualization delay model of the physical network element node according to the switching delay link structure, comprising:
generating a virtual network delay topological map of an optical transport network according to the virtualization delay model of each physical network element node in the optical transport network; and
traversing all path branches of the virtual network delay topological map, and performing path delay optimization.

9. The method of claim 8, wherein the switching delay link structure is at least one switching delay matrix, and the step of performing path delay optimization comprises:
during traversing a current topological node of a current path, if a next-hop topological node of the current topological node and the current topological node belong to a same physical network element node and belong to different switching delay matrices, skipping the next-hop topological node, and continuing to traverse other next-hop topological nodes.

10. A device for virtualization of a physical network element node, comprising:
a scheduling link mapping module (1201) configured to establish a switching delay link structure corresponding to a scheduling link of the physical network element node, wherein the scheduling link being a link enabling a service to be scheduled to a corresponding switching layer when the service passes through the physical network element node; and
a generation module (1202) configured to generate a virtualization delay model of the physical network element node according to the switching delay link structure;
the device **characterized in that**
the switching delay link structure is at least one switching delay matrix, and the scheduling link mapping module (1201) is further configured to: establish a switching delay matrix corresponding to the scheduling link of the physical network element node when the physical network element node is a first node or a last node; and establish, between every two physical links, a switching delay matrix corresponding to the scheduling link of the physical network element node when the physical network element node is an intermediate node.

11. The device of claim 10, wherein the switching layer is an open system interconnection, OSI model layer; and, during establishing a switching delay matrix corresponding to the scheduling link of the physical network element node, the physical link mapping module (1201) is configured to: establish a plurality of virtual layers according to the OSI model layer of the physical network element node, establish a plurality of interlayer adaptive delay links among the plurality of virtual layers according to the scheduling link, and establish the switching delay matrix according to the plurality of virtual layers and the interlayer adaptive delay links.

12. The device of claim 11, wherein the OSI model layer comprises an L0 layer, an L1 layer and an L2 layer; and, the plurality of virtual layers comprise a first virtual layer corresponding to the L0 layer, a second virtual layer corresponding to the L1 layer and a third virtual layer corresponding to the L2 layer.

13. The device of claim 12, wherein the third virtual layer comprises a first virtual sub-layer and a second virtual sub-layer; and, during establishing a plurality of interlayer adaptive delay links among the plurality of virtual layers, the scheduling link mapping module (1201) is configured to: establish a first interlayer adaptive delay link between the first virtual layer and the second virtual layer, establish a second interlayer adaptive delay link between the second virtual layer and the first virtual sub-layer, and establish a third interlayer adaptive delay link between the first virtual sub-layer and the second virtual sub-layer.

14. The device of claim 11, wherein during establishing a plurality of virtual layers according to the OSI model layer of the physical network element node, the scheduling link mapping module (1201) is configured to: establish a plurality of virtual nodes according to the OSI model layer when the physical network element node is a first node or a last node, each of the virtual nodes forming a virtual layer; and, establish a plurality of virtual layers according to the OSI model layer when the physical network element node is an intermediate node, each of the virtual layers being composed of a virtual node pair, and establish an interlayer adaptive delay link between the virtual node pair of each of the virtual layers.

15. A computer-readable storage medium storing a computer program for virtualization of a physical network element node, wherein the computer program is executable by at least one processor, to implement the steps of the method of any one of claims 1 to 9.

## Patentansprüche

1. Verfahren für eine Virtualisierung eines physikalischen Netzelementknotens, das die folgenden Schritte umfasst:
Einrichten (S101, S201) einer Schaltverzögerungsverbindungsstruktur, die einer Planungsverbindung des physikalischen Netzelementknotens entspricht, wobei die Planungsverbindung eine Verbindung ist, die einem Dienst ermöglicht, in eine entsprechende Schaltschicht eingeplant zu werden, wenn der Dienst durch den physikalischen Netzelementknoten führt; und
Erzeugen eines Virtualisierungsverzögerungsmodells des physikalischen Netzelementknotens gemäß der Schaltverzögerungsverbindungsstruktur;
wobei das Verfahren **dadurch gekennzeichnet ist, dass**
die Schaltverzögerungsverbindungsstruktur mindestens eine Schaltverzögerungsmatrix ist und der Schritt des Einrichtens (S101, S201) einer Schaltverzögerungsverbindungsstruktur, die einer Planungsverbindung des physikalischen Netzelementknotens entspricht, Folgendes umfasst:
dann, wenn der physikalische Netzelementknoten ein erster Knoten oder ein letzter Knoten ist, Einrichten einer Schaltverzögerungsmatrix, die der Planungsverbindung des physikalischen Netzelementknotens entspricht; und
dann, wenn der physikalische Netzelementknoten ein Zwischenknoten ist, Einrichten zwischen jeweils zwei physikalischen Verbindungen einer Schaltverzögerungsmatrix, die der Planungsverbindung des physikalischen Netzelementknotens entspricht.

2. Verfahren nach Anspruch 1, wobei die Schaltschicht eine Schicht eines offenen Systemverbindungsmodells, OSI-Modellschicht, ist, wobei der Schritt des Einrichtens einer Schaltverzögerungsmatrix, die einer Planungsverbindung des physikalischen Netzelementknotens entspricht, Folgendes umfasst:
Einrichten mehrerer virtueller Schichten gemäß der OSI-Modellschicht des physikalischen Netzelementknotens;
Einrichten mehrerer adaptiver Zwischenschichtverzögerungsverbindungen unter den mehreren virtuellen Schichten gemäß der Planungsverbindung; und
Einrichten der Schaltverzögerungsmatrix gemäß den mehreren virtuellen Schichten und den adaptiven Zwischenschichtverzögerungsverbindungen.

3. Verfahren nach Anspruch 2, wobei die OSI-Modellschicht eine L0-Schicht, eine L1-Schicht und eine L2-Schicht umfasst; wobei die mehreren virtuellen Schichten eine erste virtuelle Schicht, die der L0-Schicht entspricht, eine zweite virtuelle Schicht, die der L1-Schicht entspricht, und eine dritte virtuelle Schicht, die der L2-Schicht entspricht, umfassen.

4. Verfahren nach Anspruch 3, wobei die dritte virtuelle Schicht eine erste virtuelle Unterschicht und eine zweite virtuelle Unterschicht umfasst und der Schritt des Einrichtens mehrerer adaptiver Zwischenschichtverzögerungsverbindungen unter den mehreren virtuellen Schichten Folgendes umfasst:
Einrichten einer ersten adaptiven Zwischenschichtverzögerungsverbindung zwischen der ersten virtuellen Schicht und der zweiten virtuellen Schicht;
Einrichten einer zweiten adaptiven Zwischenschichtverzögerungsverbindung zwischen der zweiten virtuellen Schicht und der ersten virtuellen Unterschicht; und
Einrichten einer dritten adaptiven Zwischenschichtverzögerungsverbindung zwischen der ersten virtuellen Unterschicht und der zweiten virtuellen Unterschicht.

5. Verfahren nach Anspruch 2, wobei der Schritt des Einrichtens mehrerer virtueller Schichten gemäß der OSI-Modellschicht des physikalischen Netzelementknotens Folgendes umfasst:
dann, wenn der physikalische Netzelementknoten ein erster Knoten oder ein letzter Knoten ist, Einrichten mehrerer virtueller Knoten gemäß der OSI-Modellschicht, wobei jeder der virtuellen Knoten eine virtuelle Schicht bildet; und
dann, wenn der physikalische Netzelementknoten ein Zwischenknoten ist, Einrichten mehrerer virtueller Schichten gemäß der OSI-Modellschicht, wobei jede virtuelle Schicht aus einem virtuellen Knotenpaar besteht, und Einrichten einer adaptiven Zwischenschichtverzögerungsverbindung zwischen dem virtuellen Knotenpaar jeder der virtuellen Schichten.

6. Verfahren nach Anspruch 5, wobei das virtuelle Knotenpaar einen ersten virtuellen Knoten und einen zweiten virtuellen Knoten umfasst; wobei die adaptive Zwischenschichtverzögerungsverbindung zwischen beliebigen zwei virtuellen Schichten eine erste adaptive Zwischenschichtverzögerungsverbindung und eine zweite adaptive Zwischenschichtverzögerungsverbindung umfasst; und der Schritt des Einrichtens mehrerer adaptiver Zwischenschichtverzögerungsverbindungen unter den mehreren virtuellen Schichten ferner Folgendes umfasst:
Einrichten der ersten adaptiven Zwischenschichtverzögerungsverbindung zwischen ersten virtuellen Knoten beliebiger zwei virtueller Schichten und Einrichten der zweiten adaptiven Zwischenschichtverzögerungsverbindung zwischen zweiten virtuellen Knoten beliebiger zwei virtueller Schichten.

7. Verfahren nach Anspruch 3 oder 4, das ferner Folgendes umfasst:
dann, wenn die erste virtuelle Schicht aus einem virtuellen Knoten besteht, Einstellen einer physikalischen Verbindung des physikalischen Netzelementknotens auf diesem virtuellen Knoten; und
dann, wenn die erste virtuelle Schicht aus einem virtuellen Knotenpaar besteht, Einstellen einer physikalischen Verbindung des physikalischen Netzelementknotens auf jedem von zwei virtuellen Knoten in dem virtuellen Knotenpaar; oder Einrichten eines externen virtuellen Knotens, der jedem physikalischen Anschluss des physikalischen Netzelementknotens entspricht, Einstellen einer physikalischen Verbindung des physikalischen Netzelementknotens auf jedem externen virtuellen Knoten und Einstellen auf jedem von zwei virtuellen Knoten des virtuellen Knotenpaars einer internen virtuellen Verbindung zum Verbinden der entsprechenden externen virtuellen Knoten.

8. Verfahren nach einem der Ansprüche 1 bis 7, das nach dem Schritt des Erzeugens eines Virtualisierungsverzögerungsmodells des physikalischen Netzelementknotens gemäß der Schaltverzögerungsverbindungsstruktur Folgendes umfasst:
Erzeugen einer topologischen Karte einer Verzögerung eines virtuellen Netzes eines optischen Transportnetzes gemäß dem Virtualisierungsverzögerungsmodell jedes physikalischen Netzelementknotens in dem optischen Transportnetz; und
Durchqueren aller Wegzweige der topologischen Karte der Verzögerung des virtuellen Netzes und Ausführen einer Wegverzögerungsoptimierung.

9. Verfahren nach Anspruch 8, wobei die Schaltverzögerungsverbindungsstruktur mindestens eine Schaltverzögerungsmatrix ist und der Schritt des Ausführens einer Wegverzögerungsoptimierung Folgendes umfasst:
während des Durchquerens eines aktuellen topologischen Knotens eines aktuellen Wegs dann, wenn ein topologischer Knoten eines nächsten Sprungs des aktuellen topologischen Knotens und der aktuelle topologische Knoten zu demselben physikalischen Netzelementknoten gehören und zu verschiedenen Schaltverzögerungsmatrizen gehören, Überspringen des topologischen Knotens des nächsten Sprungs und Fortsetzen, andere topologische Knoten nächster Sprünge zu durchqueren.

10. Vorrichtung für eine Virtualisierung eines physikalischen Netzelementknotens, die Folgendes umfasst:
ein Planungsverbindungsabbildungsmodul (1201), das konfiguriert ist, eine Schaltverzögerungsverbindungsstruktur, die einer Planungsverbindung des physikalischen Netzelementknotens entspricht, einzurichten, wobei die Planungsverbindung eine Verbindung ist, die einem Dienst ermöglicht, in eine entsprechende Schaltschicht eingeplant zu werden, wenn der Dienst durch den physikalischen Netzelementknoten führt; und
ein Erzeugungsmodul (1202), das konfiguriert ist, ein Virtualisierungsverzögerungsmodell des physikalischen Netzelementknotens gemäß der Schaltverzögerungsverbindungsstruktur zu erzeugen;
wobei die Vorrichtung **dadurch gekennzeichnet ist, dass**
die Schaltverzögerungsverbindungsstruktur mindestens eine Schaltverzögerungsmatrix ist und das Planungsverbindungsabbildungsmodul (1201) ferner konfiguriert ist zum: Einrichten einer Schaltverzögerungsmatrix, die der Planungsverzögerung des physikalischen Netzelementknotens entspricht, wenn der physikalische Netzelementknoten ein erster Knoten oder ein letzter Knoten ist; und Einrichten zwischen jeweils zwei physikalischen Verbindungen einer Schaltverzögerungsmatrix, die der Planungsverbindung des physikalischen Netzelementknotens entspricht, wenn der physikalische Netzelementknoten ein Zwischenknoten ist.

11. Vorrichtung nach Anspruch 10, wobei die Schaltschicht eine Schicht eines offenen Systemverbindungsmodells, OSI-Modellschicht, ist; und während des Einrichtens einer Schaltverzögerungsmatrix, die der Planungsverbindung des physikalischen Netzelementknotens entspricht, das Modul zur Abbildung physikalischer Verbindungen (1201) konfiguriert ist zum: Einrichten mehrerer virtueller Schichten gemäß der OSI-Modellschicht des physikalischen Netzelementknotens, Einrichten mehrerer adaptiver Zwischenschichtverzögerungsverbindungen unter den mehreren virtuellen Schichten gemäß der Planungsverbindung und Einrichten der Schaltverzögerungsmatrix gemäß den mehreren virtuellen Schichten und den adaptiven Zwischenschichtverzögerungsverbindungen.

12. Vorrichtung nach Anspruch 11, wobei die OSI-Modellschicht eine L0-Schicht, eine L1-Schicht und eine L2-Schicht umfasst; und die mehreren virtuellen Schichten eine erste virtuelle Schicht, die der L0-Schicht entspricht, eine zweite virtuelle Schicht, die der L1-Schicht entspricht, und eine dritte virtuelle Schicht, die der L2-Schicht entspricht, umfassen.

13. Vorrichtung nach Anspruch 12, wobei die dritte virtuelle Schicht eine erste virtuelle Unterschicht und eine zweite virtuelle Unterschicht umfasst; und während des Einrichtens mehrerer adaptiver Zwischenschichtverzögerungsverbindungen unter den mehreren virtuellen Schichten das Planungsverbindungsabbildungsmodul (1201) konfiguriert ist zum: Einrichten einer ersten adaptiven Zwischenschichtverzögerungsverbindung zwischen der ersten virtuellen Schicht und der zweiten virtuellen Schicht, Einrichten einer zweiten adaptiven Zwischenschichtverzögerungsverbindung zwischen der zweiten virtuellen Schicht und der ersten virtuellen Unterschicht und Einrichten einer dritten adaptiven Zwischenschichtverzögerungsverbindung zwischen der ersten virtuellen Unterschicht und der zweiten virtuellen Unterschicht.

14. Vorrichtung nach Anspruch 11, wobei während des Einrichtens mehrerer virtueller Schichten gemäß der OSI-Modellschicht des physikalischen Netzelementknotens das Planungsverbindungsabbildungsmodul (1201) konfiguriert ist zum: Einrichten mehrerer virtueller Knoten gemäß der OSI-Modellschicht, wenn der physikalische Netzelementknoten ein erster Knoten oder ein letzter Knoten ist, wobei jeder der virtuellen Knoten eine virtuelle Schicht bildet; und Einrichten mehrerer virtueller Schichten gemäß der OSI-Modellschicht, wenn der physikalische Netzelementknoten ein Zwischenknoten ist, wobei jede der virtuellen Schichten aus einem virtuellen Knotenpaar besteht, und Einrichten einer adaptiven Zwischenschichtverzögerungsverbindung zwischen dem virtuellen Knotenpaar jeder der virtuellen Schichten.

15. Computerlesbares Speichermedium, das ein Computerprogramm für die Virtualisierung eines physikalischen Netzelementknotens speichert, wobei das Computerprogramm durch mindestens einen Prozessor ausführbar ist, um die Schritte des Verfahrens nach einem der Ansprüche 1 bis 9 zu implementieren.

## Revendications

1. Procédé de virtualisation d'un noeud d'éléments de réseau physique, comprenant les étapes suivantes :
l'établissement (S101, S201) d'une structure de liaison à retard de commutation correspondant à une liaison de planification du noeud d'éléments de réseau physique, dans lequel la liaison de planification est une liaison permettant à un service d'être planifié sur une couche de commutation correspondante lorsque le service traverse le noeud d'éléments de réseau physique ; et
la génération d'un modèle de retard de virtualisation du noeud d'éléments de réseau physique selon la structure de liaison à retard de commutation ;
le procédé est **caractérisé en ce que** :
la structure de liaison à retard de commutation est au moins une matrice à retard de commutation, et l'étape d'établissement (S101, S201) d'une structure de liaison à retard de commutation correspondant à une liaison de planification du noeud d'éléments de réseau physique comprend :
lorsque le noeud d'éléments de réseau physique est un premier noeud ou un dernier noeud, l'établissement d'une matrice à retard de commutation correspondant à la liaison de planification du noeud d'éléments de réseau physique ; et
lorsque le noeud d'éléments de réseau physique est un noeud intermédiaire, l'établissement, entre chacune des deux liaisons physiques, d'une matrice à retard de commutation correspondant à la liaison de planification du noeud d'éléments de réseau physique.

2. Procédé selon la revendication 1, dans lequel la couche de commutation est une couche de modèle d'interconnexion de systèmes ouverts, OSI, ; l'étape d'établissement d'une matrice à retard de commutation correspondant à une liaison de planification du noeud d'éléments de réseau physique comprend :
l'établissement d'une pluralité de couches virtuelles selon la couche de modèle OSI du noeud d'éléments de réseau physique ;
l'établissement d'une pluralité de liaisons de retard adaptatives intercouches parmi la pluralité de couches virtuelles selon la liaison de planification ; et
l'établissement de la matrice à retard de commutation selon la pluralité de couches virtuelles et les liaisons de retard adaptatives intercouches.

3. Procédé selon la revendication 2, dans lequel la couche de modèle OSI comprend une couche L0, une couche L1 et une couche L2 ; la pluralité de couches virtuelles comprend une première couche virtuelle correspondant à la couche L0, une deuxième couche virtuelle correspondant à la couche L1 et une troisième couche virtuelle correspondant à la couche L2.

4. Procédé selon la revendication 3, dans lequel la troisième couche virtuelle comprend une première sous-couche virtuelle et une deuxième sous-couche virtuelle, et l'étape d'établissement d'une pluralité de liaisons de retard adaptatives intercouches parmi la pluralité de couches virtuelles comprend :
l'établissement d'une première liaison de retard adaptative intercouches entre la première couche virtuelle et la deuxième couche virtuelle ;
l'établissement d'une deuxième liaison de retard adaptative intercouches entre la deuxième couche virtuelle et la première sous-couche virtuelle ; et
l'établissement d'une troisième liaison de retard adaptative intercouches entre la première sous-couche virtuelle et la deuxième sous-couche virtuelle.

5. Procédé selon la revendication 2, dans lequel l'étape d'établissement d'une pluralité de couches virtuelles selon la couche de modèle OSI du noeud d'éléments de réseau physique comprend :
lorsque le noeud d'éléments de réseau physique est un premier noeud ou un dernier noeud, l'établissement d'une pluralité de noeuds virtuels selon la couche de modèle OSI, chacun des noeuds virtuels formant une couche virtuelle ; et
lorsque le noeud d'éléments de réseau physique est un noeud intermédiaire, l'établissement d'une pluralité de couches virtuelles selon la couche de modèle OSI, chacune des couches virtuelles étant composée d'une paire de noeuds virtuels, et l'établissement d'une liaison de retard adaptative intercouches entre la paire de noeuds virtuels de chacune des couches virtuelles.

6. Procédé selon la revendication 5, dans lequel la paire de noeuds virtuels comprend un premier noeud virtuel et un deuxième noeud virtuel ; la liaison de retard adaptative intercouches entre n'importe laquelle des deux couches virtuelles comprend une première liaison de retard adaptative intercouches et une deuxième liaison de retard adaptative intercouches ; et l'étape d'établissement d'une pluralité de liaisons de retard adaptatives intercouches parmi la pluralité de couches virtuelles comprend en outre :
l'établissement de la première liaison de retard adaptative intercouches entre des premiers noeuds virtuels de l'une quelconque des deux couches virtuelles, et l'établissement de la deuxième liaison de retard adaptative intercouches entre des deuxièmes noeuds virtuels de l'une quelconque des deux couches virtuelles.

7. Procédé selon la revendication 3 ou 4, comprenant en outre :
lorsque la première couche virtuelle est composée d'un noeud virtuel, le réglage d'une liaison physique du noeud d'éléments de réseau physique sur ce noeud virtuel ; et
lorsque la première couche virtuelle est composée d'une paire de noeuds virtuels, le réglage d'une liaison physique du noeud d'éléments de réseau physique sur chacun des deux nœuds virtuels dans la paire de nœuds virtuels ; ou l'établissement d'un nœud virtuel externe correspondant à chaque port physique du nœud d'éléments de réseau physique, le réglage d'une liaison physique du nœud d'éléments de réseau physique sur chaque nœud virtuel externe, et le réglage, sur chacun des deux noeuds virtuels de la paire de noeuds virtuels, d'une liaison virtuelle interne pour connecter les noeuds virtuels externes correspondants.

8. Procédé selon l'une quelconque des revendications 1 à 7, après l'étape de génération d'un modèle de retard de virtualisation du noeud d'éléments de réseau physique selon la structure de liaison à retard de commutation, comprenant :
la génération d'une carte topologique de retard de réseau virtuel d'un réseau de transport optique selon le modèle de retard de virtualisation de chaque noeud d'éléments de réseau physique dans le réseau de transport optique ; et
la traversée de toutes les branches de trajet de la carte topologique de retard de réseau virtuel, et l'exécution d'une optimisation de retard de trajet.

9. Procédé selon la revendication 8, dans lequel la structure de liaison à retard de commutation est au moins une matrice à retard de commutation, et l'étape d'exécution d'une optimisation de retard de trajet comprend :
pendant la traversée d'un noeud topologique actuel d'un trajet actuel, si un noeud topologique de prochain bond du noeud topologique actuel et le noeud topologique actuel appartiennent à un même noeud d'éléments de réseau physique et appartiennent à différentes matrices à retard de commutation, sauter le noeud topologique de prochain bond, et continuer à traverser d'autres noeuds topologiques de prochain bond.

10. Dispositif de virtualisation d'un noeud d'éléments de réseau physique, comprenant :
un module de mise en correspondance de liaisons de planification (1201) configuré pour établir une structure de liaison à retard de commutation correspondant à une liaison de planification du noeud d'éléments de réseau physique, dans lequel la liaison de planification est une liaison permettant à un service d'être planifié sur une couche de commutation correspondante lorsque le service traverse le noeud d'éléments de réseau physique ; et
un module de génération (1202) configuré pour générer un modèle de retard de virtualisation du noeud d'éléments de réseau physique selon la structure de liaison à retard de commutation ;
le dispositif est **caractérisé en ce que** :
la structure de liaison à retard de commutation est au moins une matrice à retard de commutation, et le module de mise en correspondance de liaisons de planification (1201) est configuré en outre pour : établir une matrice à retard de commutation correspondant à une liaison de planification du noeud d'éléments de réseau physique lorsque le noeud d'éléments de réseau physique est un premier noeud ou un dernier noeud ; et établir, entre chacune des deux liaisons physiques, une matrice à retard de commutation correspondant à la liaison de planification du noeud d'éléments de réseau physique lorsque le noeud d'éléments de réseau physique est un noeud intermédiaire.

11. Dispositif selon la revendication 10, dans lequel la couche de commutation est une couche de modèle d'interconnexion de systèmes ouverts, OSI, ; et pendant l'établissement d'une matrice à retard de commutation correspondant à la liaison de planification du nœud d'éléments de réseau physique, le module de mise en correspondance de liaisons physiques (1201) est configuré pour : établir une pluralité de couches virtuelles selon la couche de modèle OSI du noeud d'éléments de réseau physique, établir une pluralité de liaisons de retard adaptatives intercouches parmi la pluralité de couches virtuelles selon la liaison de planification, et établir la matrice à retard de commutation selon la pluralité de couches virtuelles et les liaisons de retard adaptatives intercouches.

12. Dispositif selon la revendication 11, dans lequel la couche de modèle OSI comprend une couche L0, une couche L1 et une couche L2 ; et la pluralité de couches virtuelles comprend une première couche virtuelle correspondant à la couche L0, une deuxième couche virtuelle correspondant à la couche L1 et une troisième couche virtuelle correspondant à la couche L2.

13. Dispositif selon la revendication 12, dans lequel la troisième couche virtuelle comprend une première sous-couche virtuelle et une deuxième sous-couche virtuelle ; et pendant l'établissement d'une pluralité de liaisons de retard adaptatives intercouches parmi la pluralité de couches virtuelles, le module de mise en correspondance de liaisons de planification (1201) est configuré pour : établir une première liaison de retard adaptative intercouches entre la première couche virtuelle et la deuxième couche virtuelle, établir une deuxième liaison de retard adaptative intercouches entre la deuxième couche virtuelle et la première sous-couche virtuelle, et établir une troisième liaison de retard adaptative intercouches entre la première sous-couche virtuelle et la deuxième sous-couche virtuelle.

14. Dispositif selon la revendication 11, dans lequel pendant l'établissement d'une pluralité de couches virtuelles selon la couche de modèle OSI du noeud d'éléments de réseau physique, le module de mise en correspondance de liaisons de planification (1201) est configuré pour : établir une pluralité de noeuds virtuels selon la couche de modèle OSI lorsque le noeud d'éléments de réseau physique est un premier noeud ou un dernier noeud, chacun des nœuds virtuels formant une couche virtuelle ; et établir une pluralité de couches virtuelles selon la couche de modèle OSI lorsque le noeud d'éléments de réseau physique est un noeud intermédiaire, chacune des couches virtuelles étant composée d'une paire de noeuds virtuels, et établir une liaison de retard adaptative intercouches entre la paire de noeuds virtuels de chacune des couches virtuelles.

15. Support de stockage lisible par ordinateur stockant un programme informatique pour une virtualisation d'un noeud d'éléments de réseau physique, dans lequel le programme informatique est exécutable par au moins un processeur, pour mettre en oeuvre les étapes du procédé selon l'une quelconque des revendications 1 à 9.
